Europäisches Patentamt

(19) European Patent Office

Office européen des brevets

(11) Publication number: **0 320 951 B1**

# (12) EUROPEAN PATENT SPECIFICATION

(45) Date of publication of patent specification :
10.04.91 Bulletin 91/15

(51) Int. Cl.⁵ : **F16C 33/30, F01D 25/16, F16C 19/02**

(21) Application number : 88121037.1

(22) Date of filing : 15.12.88

(54) Full type ball bearing for turbochargers.

(30) Priority : 15.12.87 JP 317052/87

(43) Date of publication of application :
21.06.89 Bulletin 89/25

(45) Publication of the grant of the patent :
10.04.91 Bulletin 91/15

(84) Designated Contracting States :
DE FR GB

(56) References cited :
DE-A- 2 041 677
DE-A- 2 511 120
DE-U- 8 711 624
FR-A- 2 339 773
US-A- 4 634 300
US-A- 4 676 667

(73) Proprietor : KOYO SEIKO CO., LTD.
2, Unagidaninishinocho Minami-Ku
Osaka-shi Osaka 542 (JP)

(72) Inventor : Tanimoto, Kiyoshi
Koyo Seiko Co.,Ltd. No.2,
Unagidani-Nishinocho
Minami-ku Osaka (JP)
Inventor : Takebayashi, Hiroaki
Koyo Seiko Co.,Ltd. No.2,
Unagidani-Nishinocho
Minami-ku Osaka (JP)
Inventor : Rokkaku, Kazuo
Koyo Seiko Co.,Ltd. No.2,
Unagidani-Nishinocho
Minami-ku Osaka (JP)

(74) Representative : TER MEER - MÜLLER -
STEINMEISTER & PARTNER
Mauerkircherstrasse 45
W-8000 München 80 (DE)

## Description

The present invention relates to a full type ball bearing as defined in the preamble of claim 1 and generally known in the art.

Since turbochargers are used at a high temperature, under a great load and at a high speed of rotation, common ball bearings comprising inner and outer rings, balls and a retainer, if incorporated therein, encounter the problem of a shortened life. During the rise to a high speed, especially, lubrication of the retainer portion poses a problem, leading to a break of the bearing in a short period of time. To overcome the problem encountered with the retainer portion, there is a need to finish the retainer with high precision or to subject the retainer to a special treatment such as silver plating. Accordingly, full type ball bearings appear useful for turbochargers, whereas with the conventional full type ball bearing wherein the balls are made of steel, the contact between the balls involves slippage because the balls move in directions totally opposite to each other, entailing depletion of the lubricant and leading to an early break of the bearing. For this reason, the full type ball bearing is not in use although the bearing is thought favorable for use in turbochargers.

The main object of the present invention is to overcome the foregoing problems and to provide a full type ball bearing which is highly responsive and has a prolonged life for use in turbochargers.

The present invention accomplishes this object with the characterising features of claims.

Being a full type ball bearing, the bearing of the invention is free of the problem of a shortened life due to the presence of the retainer incorporated in common ball bearings. Moreover, the present bearing is 20 to 30% greater in the number of balls than such common bearings and is therefore greater in load rating and prolonged in fatigue life. The balls, which are made of a ceramic, can be in contact with one another with reduced friction, which is favorable in the event of depletion of lubricant, consequently rendering the bearing operable free of seizure and giving a prolonged life to the bearing. The ceramic having a smaller density than steel decreases the moment of inertia involved, which improves responsiveness of the turbocharger, and reduces the centrifugal force acting on the outer ring. Moreover, since the ceramic has a large longitudinal elastic modulus, the contact area between balls and races is decreased which results in diminished slippage, giving improved responsiveness the turbocharger.

Thus, the full type ball bearing of the present invention is highly responsive and free of seizure and has a prolonged life.

Fig. 1 is a fragmentary view in cross section of a full type ball bearing embodying the invention for use in turbochargers ;

Fig. 2 is a view in section taken along the line II-II in Fig. 1 ;

Fig. 3 is a graph showing the result of a first test conducted for an example and a comparative example to establish the relationship between the air pressure supplied to a turbocharger and the number of revolutions of the bearing ;

Fig. 4 is a graph showing the result of a first test conducted for the example and the comparative example to establish the relationship between the elapsed time and the number of revolutions of the bearing during rapid acceleration ;

Fig. 5 is a graph showing the result of a rapid acceleration repetition test conducted for the example and the comparative example by repeatedly stopping and rapidly accelerating the bearing ;

Fig. 6 is a graph showing the result of a second test conducted for the example and the comparative example to establish the relationship between the air pressure supplied to the turbocharger and the number of revolutions of the bearing ; and

Fig. 7 is a graph showing the result of a second test conducted for the example and the comparative example to establish the relationship between the elapsed time and the number of revolutions of the bearing during rapid acceleration.

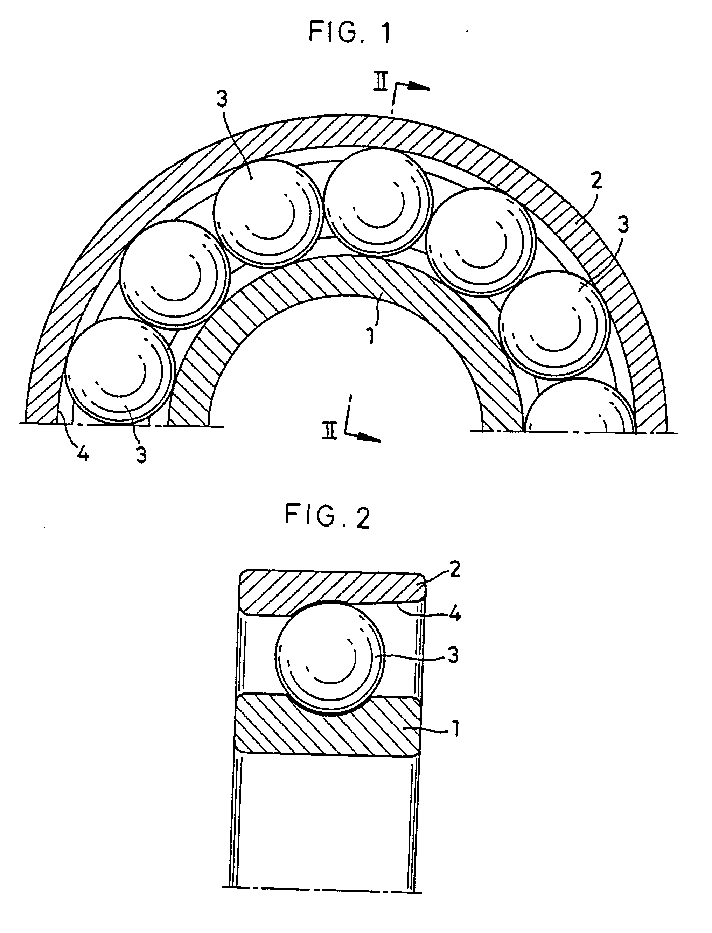

Figs. 1 and 2 show a full type ball bearing embodying the invention for use in turbochargers.

The bearing is a single-row angular-contact ball bearing comprising an inner ring 1 and an outer ring 2 both made of high speed steel,(such as AISI M50), and balls 3 made of a ceramic such as silicon nitride (3200 kg/m³). The outer ring 2 has a counterbore 4.

The bearing can be dimensioned suitably. The main portions have, for example, (bearing of the JIS 7001CA type), the following dimensions. The bearing is 12 mm in inside diameter, 28 mm in outside diameter and 8 mm in width. The shoulder portion of the inner ring 1 has a wall thickness of 2.6 mm, which is larger than the wall thickness, 2.0 mm, of the shoulder portion of the outer ring 2. The balls 3 are 13 in number and 4.7625 mm in diameter. The circumferential clearance of the bearing is 0.2 to 0.8 times the diameter of the ball 3. The circle through the centers of the balls 3, i.e. the pitch circle, has a diameter (PCD) which is so adjusted that the circumferential clearance has a value in the above range. Since the inner ring 1 has a larger wall thickness than the outer ring 2 as stated above, the PCD is greater than the average of the bearing inside diameter and

2

outside diameter.

The inner ring 1 of increased wall thickness has the advantage that the expansion of the inner ring 1 due to the centrifugal force can be smaller. The increased PCD is likely to permit the use of one more ball, resulting in a corresponding increase in the load rating to lengthen the fatigue life. Since the bearing is a full type ball bearing without any retainer, lubricant can be supplied to the raceways easily, while the counterbore 4 formed in the outer ring 2 readily permits escape of the lubricant, assuring smooth circulation of the lubricant to inhibit the rise of temperature.

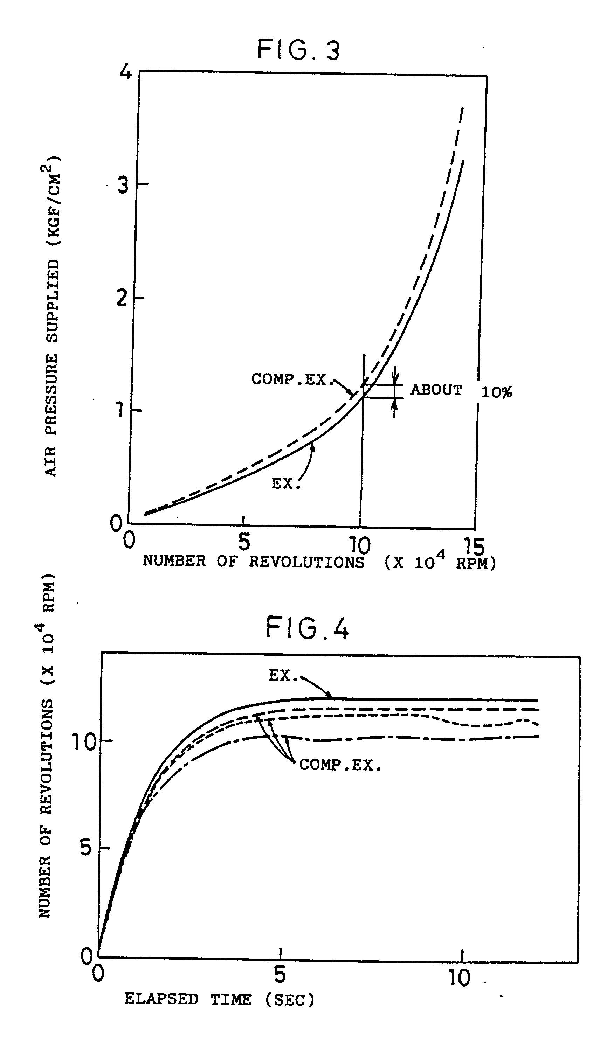

Figs. 3 to 5 show the results of first comparative performance tests conducted for the full type ball bearing of the invention shown in Figs. 1 and 2 (example) and a conventional full type ball bearing which is identical with the example in configuration and in which the inner and outer rings and the balls are all made of steel (comparative example). The inner and outer rings of the example bearing are made of high speed steel (such as AISI M50), and the balls thereof are made of silicon nitride. The comparative example bearing is wholly made of high speed steel (such as AISI M50). The test conditions are as follows.

Number of revolutions:  0 to 140,000 r.p.m.

Axial load:  120 to 400 N

Temperature:  room temperature

Lubrication

Method:  Oil mist (1 cc/min, 40 N/cm²)

Lubricant:  Velocity No. 6 (brand name)

Kinematic viscosity:  30 m²/s (20° C)

Fig. 3 is a graph showing the result obtained by testing the bearings for the relationship between the air pressure supplied to a turbocharger and the number of revolutions of the bearing. The example is represented by a solid line, and the comparative example by a broken line. It is seen that the bearing of the example can be rotated at high speeds at a lower pressure than the bearing of the comparative example.

Fig. 4 is a graph showing the result obtained by testing the bearings for rapid acceleration characteristics, i.e. for the relationship between the elapsed time and the number of revolutions of the bearing during rapid acceleration. The graph reveals that the bearing of the comparative example behaves unstably during rapid acceleration unlike the bearing of the example and is lower in speed.

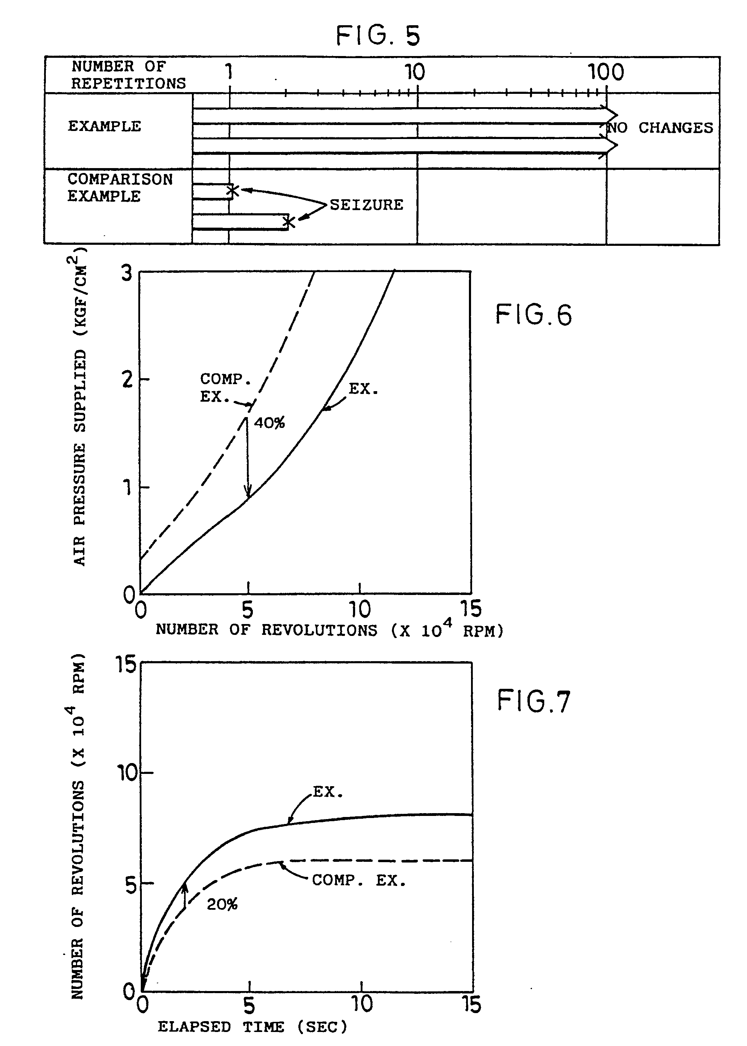

Fig. 5 is a graph showing the result obtained by testing the bearings for repeated rapid acceleration, i.e. by repeatedly stopping and rapidly accelerating the bearings. The bearing samples of the comparative example became inoperative due to seizure when subjected to the stopping-acceleration cycle several times, whereas those of the example remained free of abnormalities even when the cycle was repeated 100 times continually.

Figs. 6 and 7 show the results of second performance tests conducted for the example and the comparative example. The second tests are different from the first only in the test conditions as to the axial load and the method of lubrication as shown below.

Axial load:  800 N

Lubrication method:  oil jet

example:  0.05 liter/min

comp. ex.:  2.5 liters/min

Fig. 6 corresponds to Fig. 3, and Fig. 7 to Fig. 4.

The results given in Figs. 6 and 7 reveal the following. First, the bearing of the example is usable free of

3

troubles even if the amount of lubricant applied thereto is as small as about 1/50 of the amount used for the comparative bearing. Despite the diminished lubrication, the example bearing is rotatable at high speeds at a lower supply pressure than the comparative bearing and can be rapidly accelerated to a higher speed than the comparative bearing.

Beside silicon nitride mentioned, other ceramics of low density (up to 4000 kg/m³) are advantageously usable for the balls of the full type ball bearing for turbochargers. Such ceramics include silicon carbide (3200 kg/m³ in density) and alumina (3900 kg/m³ in density).

## Claims

1. An angular-contact full type ball bearing for use in high-speed and high-temperature applications such as turbochargers, comprising an inner ring (1) and an outer ring (2) and a plurality of balls (3), a counterbore (4) being formed at least in the outer ring (2), **characterized** in that the inner ring (1) and the outer ring (2) are made of steel and the balls (3) are made of ceramic, the wall thickness of the inner ring (1) being larger than that of the outer ring (2).

2. A full type ball bearing as claimed in claim 1, **characterized** in that said inner ring (1) and outer ring (2) are made of high-speed steel and said balls (3) are made of silicon nitride.

## Ansprüche

1. Vollrolliges Schulterkugellager für Anwendungsfälle mit hoher Drehzahl und hoher Temperatur, etwa Turbolader, mit einem Innenring (1) und einem Außenring (2) sowie einer Anzahl von Kugeln (3) und einer Gegenbohrung (4), die wenigstens in dem Außenring (2) ausgebildet ist, dadurch **gekennzeichnet**, daß der Innenring (1) und der Außenring (2) aus Stahl und die Kugeln (3) aus Keramik bestehen, und daß die Wandstärke des Innenrings (1) größer als diejenige des Außenringes (2) ist.

2. Vollrollenkugellager nach Anspruch 1, dadurch **gekennzeichnet**, daß der Innenring (1) und der Außenring (2) aus Hochgeschwindigkeitsstahl und die Kugeln (3) aus Siliciumnitrid bestehen.

## Revendications

1. Roulement à billes jointives du type à contact angulaire, destiné à être utilisé dans des applications à grandes vitesses et à hautes températures, telles que des turbocompresseurs, comportant une bague intérieure (1) et une bague extérieure (2) ainsi que plusieurs billes (3), un logement cylindrique (4) étant défini au moins dans la bague extérieure (2), **caractérisé** en ce que la bague intérieure (1) et la bague extérieure (2) sont réalisées en acier, tandis que les billes (3) sont réalisées en une matière céramique, l'épaisseur de paroi de la bague intérieure (1) étant supérieure à celle de la bague extérieure (2).

2. Roulement à billes jointives selon la revendication 1, **caractérisé** en ce que ladite bague intérieure (1) et ladite bague extérieure (2) sont réalisées en un acier rapide, tandis que lesdites billes (3) sont réalisées en azoture de silicium.

FIG. 1

FIG. 2

# FIG. 3

COMP.EX.

ABOUT 10%

EX.

AIR PRESSURE SUPPLIED ($KGF/CM^2$)

NUMBER OF REVOLUTIONS ($X\ 10^4$ RPM)

# FIG.4

EX.

COMP.EX.

NUMBER OF REVOLUTIONS ($X\ 10^4$ RPM)

ELAPSED TIME (SEC)

## FIG. 5

| NUMBER OF REPETITIONS | 1 | 10 | 100 | |
|---|---|---|---|---|
| EXAMPLE | | | | NO CHANGES |
| COMPARISON EXAMPLE | | SEIZURE | | |

FIG.6

FIG.7